# EUROPÄISCHE PATENTSCHRIFT

(11) **EP 3 178 311 B1**
(45) Veröffentlichungstag und Bekanntmachung des Hinweises auf die Patenterteilung: **06.02.2019**
(21) Anmeldenummer: 16201921.0
(22) Anmeldetag: 02.12.2016
(51) Int. Cl.: A01G 9/02, A47C 4/04, A47C 5/00, A47C 11/00, B65D 85/52, B65D 5/32

(54) **FALTSYSTEM**
FOLDING SYSTEM
SYSTÈME DE PLIAGE

(30) Priorität: 07.12.2015 DE 202015106670 U
(43) Veröffentlichungstag der Anmeldung: 14.06.2017
(73) Patentinhaber: Montara Verpacken mit System GmbH, 09603 Großschirma ST Siebenlehn (DE); Seifert Concept Beratungsgesellschaft UG (haftungsbeschränkt), 99842 Ruhla OT Thal (DE)
(72) Erfinder: Seifert, Dietrich, 99842 Ruhla (DE); Jakob, Frank, 37276 Meinhard (DE)
(74) Vertreter: SSM Sandmair

(56) Entgegenhaltungen:
- DE-U- 1 976 300
- DE-U1-202008 010 387
- US-A- 3 079 061
- US-B1- 6 745 514

## Beschreibung

Die Erfindung betrifft ein Faltsystem, das aus zwei oder mehr Systemkomponenten zusammengesetzt ist, die voneinander gelöst und zusammengefaltet werden können, um den Transport und das Lagern zu erleichtern. Das Faltsystem kann insbesondere ein Pflanzgefäß zur Bepflanzung von Balkonen und Terrassen oder in Modifikationen ein Sitzmöbel sein.

Werden Balkon- und Terrassenpflanzen in der warmen Jahreszeit auf Pflanzregalen, Pflanztischen und dergleichen abgestellt, bereiten das Wegräumen und Lagern während der kalten Jahreszeit Probleme. Oftmals steht Lagerraum in ausreichender Größe nicht zur Verfügung. Ein anderes Problem stellt sich bei Gartenarbeiten, die typischerweise in gebückter Haltung verrichtet werden müssen. Hochbeete schaffen hier zwar Abhilfe, sind jedoch sperrig im Transport oder müssen vom Verwender umständlich zusammengebaut werden. Sie sind das ganze Jahr über der Witterung ausgesetzt. Ein Abbauen, Einlagern und Wiederaufbauen ist wegen der damit verbundenen Mühen in den meisten Fällen nicht praktikabel. Ein Transport- und Lagerungsproblem entsteht auch bei anderem Mobiliar, insbesondere für Menschen, die auf beengtem Raum leben und/oder des Öfteren umziehen müssen.

Die US 6 745 514 B1 offenbart ein gattungsgemäßes Faltsystem.

Es ist eine Aufgabe der Erfindung, ein möbelartiges System zu schaffen, das einfach und platzsparend transportiert und verstaut werden kann. Das System soll insbesondere für eine Verwendung als Pflanzgefäß, Sitzmöbel oder Ablage geeignet sein.

Gegenstand der Erfindung ist ein Faltsystem nach Anspruch 1, mit einem faltbaren Seitenwandring und einem an den Seitenwandring der Form nach angepassten Falteinsatz, der in den Seitenwandring eingesetzt oder für das Einsetzen vorgesehen ist. Der Seitenwandring weist Ringfaltachsen und über die Ringfaltachsen miteinander verbundene Ringsegmente auf. Die jeweils längs den Ringfaltachsen aneinander grenzenden Ringsegmente sind um die jeweilige Ringfaltachse relativ zueinander klappbar bzw. faltbar, so dass der Seitenwandring insgesamt flach zusammengefaltet werden kann. Im zusammengefalteten Zustand kann der Seitenwandring platzsparend verstaut und einfach transportiert werden. Für den Gebrauch wird der Seitenwandring auf eine seiner beiden Stirnseiten aufgestellt und vor dem Aufrichten oder im aufgerichteten Zustand zur Ringform aufgefaltet. Der Falteinsatz weist einen Boden und vom Boden seitlich abragende Flügel auf, die in einem entfalteten Zustand des Falteinsatzes insbesondere kreuz- oder sternförmig vom Boden abragen können. Die Flügel ragen jeweils längs einer Flügelfaltachse vom Boden ab und sind längs der Flügelfaltachsen mit dem Boden verbunden, so dass jeder der Flügel um seine Flügelfaltachse relativ zum Boden klappbar bzw. faltbar ist. Im entfalteten Zustand ist der Flügeleinsatz zumindest im Wesentlichen plattenförmig flach. Die Flügel können aus dem entfalteten Zustand durch Falten bzw. Klappen um die jeweilige Flügelfaltachse aufgerichtet werden. Der Falteinsatz kann mit den aufgerichteten Flügeln insbesondere die Form eines Gefäßes aufweisen, das an einer vom Boden entfernten Oberseite offen ist, um beispielsweise Pflanzerde aufnehmen zu können. Der Seitenwandring und der Falteinsatz sind aneinander angepasst geformt, so dass der Falteinsatz in den Seitenwandring einschiebbar ist.

Um den Falteinsatz im Seitenwandring relativ zu diesem zu positionieren und im positionierten Zustand zu halten, weist der Falteinsatz mehrere Haltestrukturen auf, die jeweils in einem Abstand vom Boden von den Flügeln nach außen abragen, wenn die Flügel aufgerichtet sind. Die Haltestrukturen sind ausreichend steif, um den Falteinsatz bei bestimmungsgemäßer Verwendung am Seitenwandring in Position halten zu können. Die Haltestrukturen stützen den Falteinsatz im eingesetzten Zustand am Seitenwandring ab. In bevorzugten Ausführungen hängt der Falteinsatz mit seinen Haltestrukturen am Seitwandring. Die im Gebrauch auf den Falteinsatz wirkende Gewichtskraft wird über die Haltestrukturen in den stehenden Seitenwandring eingeleitet und der Falteinsatz hierdurch am Seitenwandring abgestützt.

Denkt man sich den Falteinsatz im entfalteten Zustand, in dem die Flügel nach außen zumindest im Wesentlichen flach abragen, auf den aufgerichteten und aufgefalteten Seitenwandring gelegt, so dass ein oberer stirnseitiger Rand des Seitenwandrings um den Boden umläuft, ragen die Flügel in Draufsicht jeweils über den stirnseitigen Rand des Seitenwandrings nach außen vor. Werden die Flügel durch Falten um die jeweils zugehörige Flügelfaltachse aufgerichtet, kann der Falteinsatz mit den aufgerichteten Flügeln in den Seitenwandring eingeschoben werden bis eine oder mehrere der Haltestrukturen jeweils in Anschlag mit dem stirnseitigen Rand des Seitenwandrings gelangt oder gelangen und den Falteinsatz im Seitenwandring halten.

Zweckmäßigerweise wird der Falteinsatz von wenigstens zwei Haltestrukturen gehalten, die von unterschiedlichen Flügeln nach außen ab- und im eingesetzten Zustand mit dem stirnseitigen Rand des Seitenwandrings in Draufsicht überlappen, vorzugsweise über diesen Rand vorragen. Bevorzugt umfasst der Falteinsatz drei oder mehr Flügel, die jeweils wenigstens eine Haltestruktur aufweisen, die vom zugehörigen Flügel in dieser Weise nach außen abragt und mit dem stirnseitigen Rand des Seitenwandrings im Anschlagkontakt ist, um die im Gebrauch auf den Falteinsatz wirkende Gewichtskraft auf mehrere Flügel, vorzugsweise auf jeden der Flügel des Falteinsatzes zu verteilen.

Der Seitenwandring ist in bevorzugten Ausführungen in sich geschlossen. Die längs der Ringfaltachsen miteinander verbundenen Ringsegmente laufen im aufgerichteten und aufgefalteten Zustand über 360° um eine zu den Ringfaltachsen parallele, zentrale Längsachse des Seitenwandrings. Grundsätzlich wäre es zwar denkbar, den Seitenwandring als offene Kette von miteinander verbundenen Ringsegmenten zu bilden und die Enden der zum Ring angeordneten Ringsegmente im zusammengesetzten Zustand des Faltsystems mittels des Falteinsatzes zusammenzuhalten, ein in sich geschlossener, zusammenhängender Seitenwandring vereinfacht jedoch den Zusammenbau des Faltsystems und erhöht die Stabilität des zusammengesetzten Faltsystems.

Der Seitenwandring umfasst wenigstens drei Ringsegmente. In dreisegmentigen Ausführungen bildet der Seitenwandring im aufgerichteten, aufgefalteten Zustand einen dreieckförmigen Ring. Der Boden des Falteinsatzes wäre in derartigen Ausführungen vorzugsweise angepasst dreieckig. In bevorzugten Ausführungen ist der Seitenwandring im aufgerichteten, aufgefalteten Zustand jedoch viereckig, besonders bevorzugt rechteckig. Entsprechend ist in den bevorzugten Ausführungen auch der Boden des Falteinsatzes viereckig und besonders bevorzugt rechteckig. Grundsätzlich kann der Seitenwandring im aufgerichteten, aufgefalteten Zustand eine beliebig polygonale Querschnittsform haben und fünf, sechs oder noch mehr Ringsegmente und diese jeweils paarweise miteinander verbindende Ringfaltgelenke aufweisen. Ringfaltgelenke bilden auch im wenigstens dreisegmentigen, vorzugsweise viersegmentigen, Seitenwandring die Ringfaltachsen. Die Ringfaltgelenke können jeweils insbesondere in der Art eines Folienscharniers gebildet sein. In bevorzugten einfachen Ausführungen besteht der Seitenwandring aus den Ringsegmenten und den Ringfaltgelenken, die jeweils zwei benachbarte Ringsegmente gelenkig miteinander verbinden, so dass die jeweils benachbarten Ringsegmente relativ zueinander klappbar bzw. faltbar sind.

Die Ringsegmente sind vorzugsweise plattenförmig. Dem Grunde nach kann jedoch eines oder können mehrere der Ringsegmente oder auch alle Ringsegmente jeweils gerundet, also schalenförmig geformt sein, wobei flache Schalenformen bevorzugt werden, um den Seitenwandring platzsparend zusammenfalten zu können.

In einfachen und nicht zuletzt deswegen bevorzugten Ausführungen weisen die Ringsegmente am Innenumfang und am Außenumfang des Seitenwandrings jeweils eine glatte Oberfläche auf.

Der Boden des Falteinsatzes weist in der Draufsicht gesehen in bevorzugten Ausführungen eine an den Innenquerschnitt des aufgerichteten, aufgefalteten Seitenwandrings angepasste Außenkontur auf. Der Boden ist in der Draufsicht gesehen polygonal mit geraden Seitenrändern, längs denen Flügelfaltachsen verlaufen. Ist der Seitenwandring im Querschnitt viereckig, bevorzugt rechteckig, hat der Boden des Falteinsatzes in bevorzugten Ausführungen dementsprechend eine an den Innenquerschnitt des aufgefalteten Seitenwandrings angepasst viereckige, bevorzugt rechteckige Form. Entsprechendes gilt für einen im Querschnitt dreieckförmigen Seitenwandring und auch für jeden beliebig anders geformten polygonalen Seitenwandring. Ist oder sind eines oder mehrere der Ringsegmente des Seitenwandrings schalenförmig gerundet, kann der Boden des Falteinsatzes angepasst an die Rundung des jeweiligen Ringsegments einen polygonalen Seitenrand aufweisen, falls im Bereich des jeweils gerundeten Ringsegments beim Falteinsatz ein aufrichtbarer Flügel oder mehrere aufrichtbare Flügel vorhanden sein sollen.

Die Haltestrukturen sind derart geformt und am Falteinsatz angeordnet, vorzugsweise an den Flügeln, dass sie den Falteinsatz im zusammengesetzten Zustand des Faltsystems am stirnseitigen Rand des Seitenwandrings in axialer Richtung abstützen. Für diese Abstützung bedarf es beim Seitenwandring keiner Formungsschritte über diejenigen hinaus, die zur Erzeugung der Ringform erforderlich sind, oder der Anbringung von Stützelementen am Seitenwandring. In bevorzugten Ausführungen erfolgt die Abstützung des Falteinsatzes nur mittels der Haltestrukturen, so dass der Seitenwandring einfach geformt und preiswert hergestellt werden kann.

Eine oder mehrere der Haltestrukturen können separat vom Falteinsatz geformt und mit dem Falteinsatz gefügt sein. In bevorzugten Ausführungen ist jedoch eine oder sind mehrere der Haltestrukturen jeweils integraler Bestandteil des Falteinsatzes, vorzugsweise des jeweiligen Flügels. In derartigen Ausführungen kann die jeweilige Haltestruktur am zugehörigen Flügel durch Umformung eines freien Endes oder in einem Teilbereich des freien Endes des jeweiligen Flügels geformt werden. In bevorzugten Ausführungen sind sämtliche Haltestrukturen jeweils in solch einer Weise als integraler Bestandteil des zugehörigen Flügels gebildet. So können mehrere, bevorzugt alle Flügel des Falteinsatzes an ihren vom Boden entfernten freien Enden jeweils einen nach außen abbiegenden, vorzugsweise abknickenden Haltestreifen aufweisen, der beim Einsetzen des Falteinsatzes gegen den stirnseitigen Rand des Seitenwandrings in Anschlag gelangt und im axialen Anschlagkontakt den Falteinsatz auf dem stirnseitigen Rand am Seitenwandring abstützt. Ein derartiger Haltestreifen kann, wie bereits erwähnt, grundsätzlich aber auch separat vom Falteinsatz gefertigt und am zugehörigen Flügel befestigt sein. In bevorzugten Ausführungen erstrecken sich die integral am Flügel geformten oder die am Flügel befestigten Haltestreifen jeweils über die gesamte Länge des zugehörigen Flügels und vorzugsweise auch über nahezu die gesamte Länge des Ringsegments, an dem der jeweilige Flügel mittels der jeweiligen Haltestruktur im zusammengesetzten Zustand des Falteinsatzes abgestützt ist.

Der Falteinsatz weist mit aufgerichteten Flügeln vorzugsweise die Form eines Gefäßes auf, wobei die Flügel umlaufend eine vom Boden aufgerichtete Seitenwand des Gefäßes bilden, die durch Schlitze, die zwischen benachbarten Flügeln verbleiben, unterbrochen ist.

In bevorzugten Ausführungen decken die Haltestrukturen bei bis auf Anschlag eingeschobenem Falteinsatz den stirnseitigen Rand des Seitenwandrings bis nahe zu den Ringfaltachsen zumindest schmutzdicht, vorzugsweise auch wasserdicht, ab.

Der Seitenwandring kann aus einer Hohlkammerplatte aus Kunststoff erhalten werden, indem die Hohlkammerplatte zur Ausbildung der Ringfaltachsen im Ganzen oder nur lokal erwärmt und linienförmig gepresst wird (Folienscharnier) und parallel zu den Ringfaltachsen verlaufende Enden der Hohlkammerplatte stoffschlüssig miteinander zum geschlossenen Seitenwandring verbunden werden.

Der Falteinsatz kann aus einer Hohlkammerplatte aus Kunststoff erhalten werden, indem die Außenkontur des Falteinsatzes in einem Trennverfahren und die Einsatzfaltachsen durch Erwärmen und linienförmiges Pressen der Hohlkammerplatte erzeugt werden.

Der Boden des Falteinsatzes ist vorzugsweise kongruent zum Hohlquerschnitt des Seitenwandrings geformt.

Die Ringsegmente können im gefalteten Zustand des Seitenwandrings in insgesamt zwei Lagen aufeinanderliegen. Alternativ kann der Seitenwandring wenigstens sechs Ringsegmente umfassen, die jeweils paarweise längs Ringfaltachsen miteinander verbunden und um die jeweilige Ringfaltachse relativ zueinander mittels M-Faltung faltbar sind.

Vorteilhafte Merkmale des erfindungsgemäßen Faltsystems werden auch in den Unteransprüchen beschrieben. Nachfolgend wird die Erfindung anhand von Ausführungsbeispielen erläutert. An den Ausführungsbeispielen offenbar werdende Merkmale bilden jeweils einzeln und in jeder Merkmalskombination die Gegenstände der Ansprüche weiter, soweit einzelne Merkmale einander nicht erkennbar ausschließen. Es zeigen:
- Figur 1: einen aufgerichteten und aufgefalteten Seitenwandring eines Faltsystems eines ersten Ausführungsbeispiels,
- Figur 2: den Seitenwandring der Figur 1 im zusammengefalteten Zustand,
- Figur 3: einen Falteinsatz des ersten Ausführungsbeispiels mit aufgerichteten Flügeln,
- Figur 4: den Falteinsatz der Figur 3 im entfalteten Zustand in Draufsicht,
- Figur 5: den Seitenwandring des ersten Ausführungsbeispiels und den auf den Seitenwandring aufgelegten Falteinsatz des ersten Ausführungsbeispiels in Draufsicht,
- Figur 6: einen Querschnitt des Seitenwandrings und des Falteinsatzes des ersten Ausführungsbeispiels im zusammengesetzten Zustand,
- Figur 7: einen aufgerichteten und aufgefalteten Seitenwandring, der mittels M-Faltung zusammengefaltet werden kann,
- Figur 8: den Seitenwandring der Figur 7 beim Zusammenfalten,
- Figur 9: den Seitenwandring der Figuren 7 und 8 im nahezu zusammengefalteten Zustand,
- Figur 10: einen aufgerichteten und aufgefalteten Seitenwandring eines Faltsystems eines zweiten Ausführungsbeispiels,
- Figur 11: einen Falteinsatz des zweiten Ausführungsbeispiels mit aufgerichteten Flügeln,
- Figur 12: den Seitenwandring und den Falteinsatz des zweiten Ausführungsbeispiels beim Zusammensetzen,
- Figur 13: das Faltsystem des zweiten Ausführungsbeispiels im zusammengesetzten Zustand und

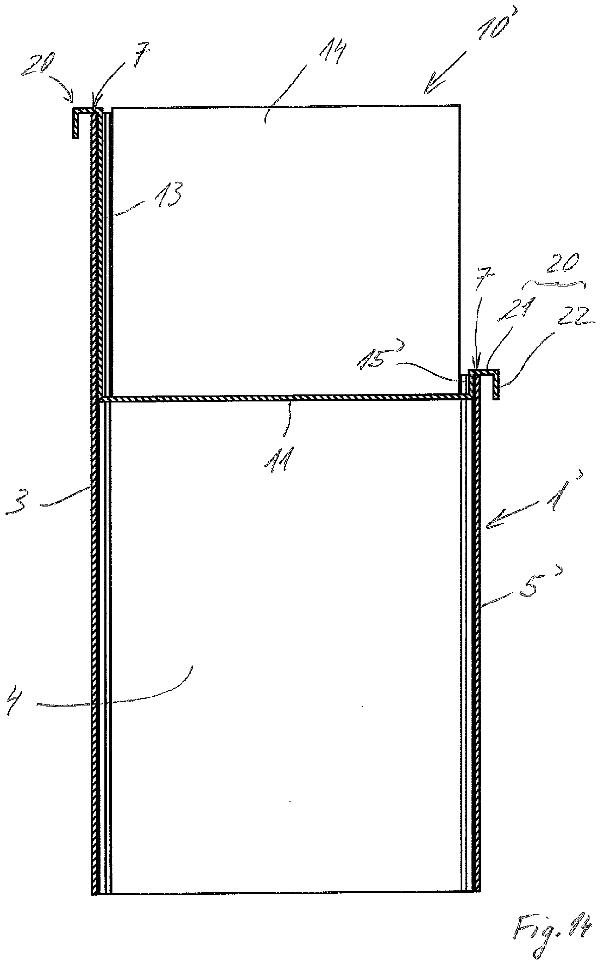

- Figur 14: einen Querschnitt des Faltsystems des zweiten Ausführungsbeispiels im zusammengesetzten Zustand.

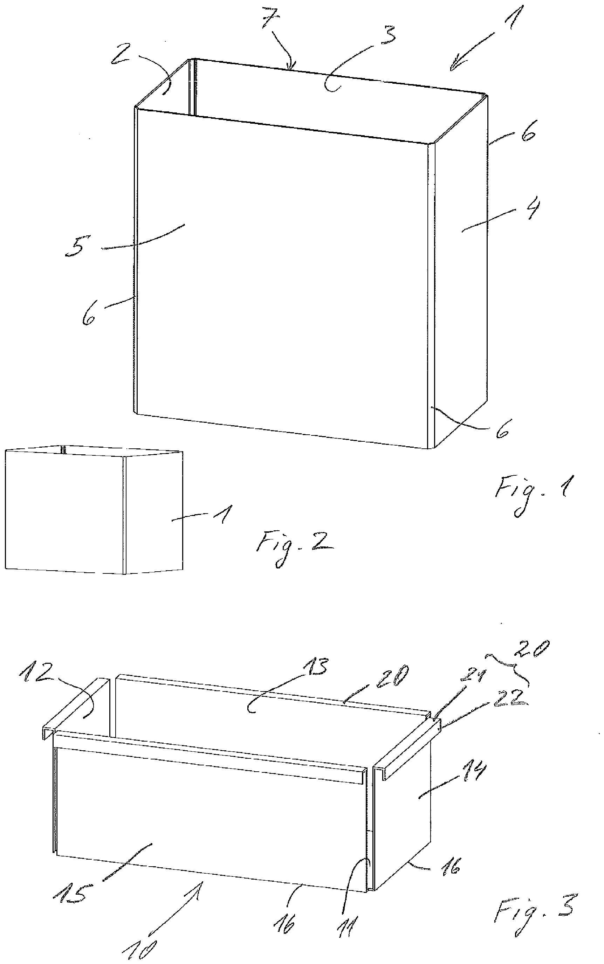

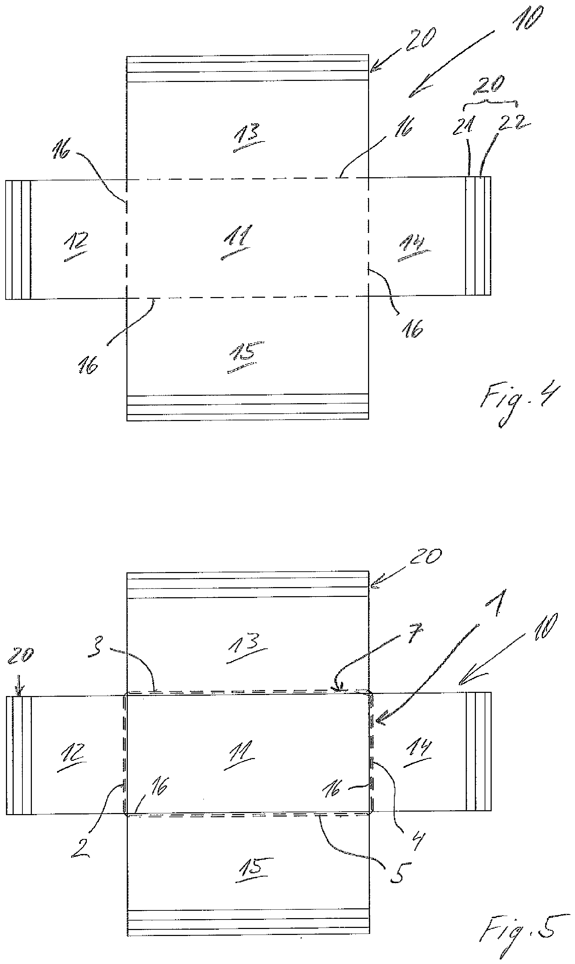

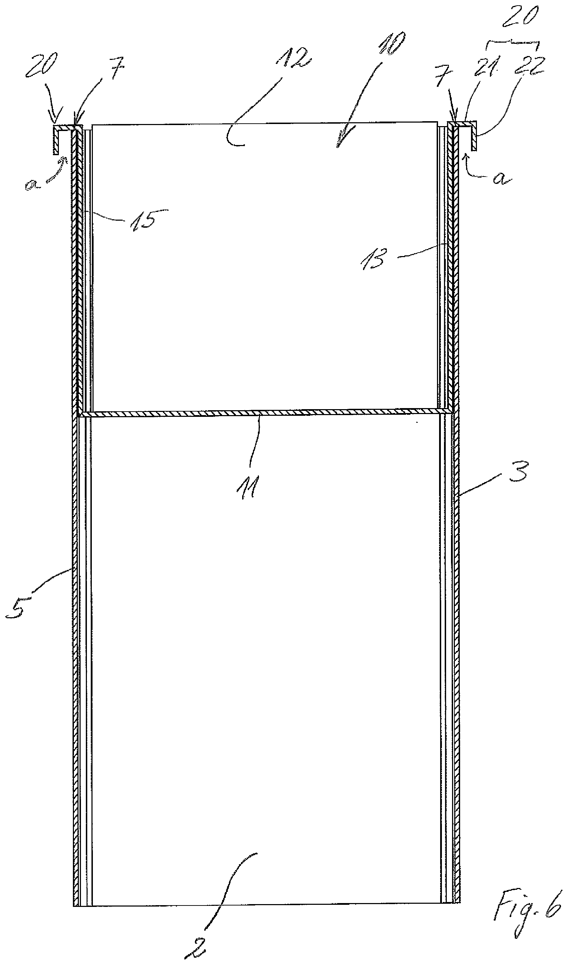

Die Figuren 1 bis 6 zeigen ein Faltsystem eines ersten Ausführungsbeispiels. Das Faltsystem umfasst einen in den Figuren 1 und 2 dargestellten Seitenwandring 1 und einen in den Figuren 3 und 4 dargestellten Falteinsatz 10, der in den Seitenwandring 1 eingeschoben werden kann und sich im eingeschobenen bzw. eingesetzten Zustand am Seitenwandring 1 durch Anschlagkontakt an einem stirnseitigen Rand 7 des Seitenwandrings 1 abstützt, wie dies in Figur 6 illustriert ist. Der Seitenwandring 1 und der Falteinsatz 10 sind Faltstrukturen, die jeweils in einen Gebrauchszustand aufgefaltet und in einen Transport- und Lagerungszustand platzsparend zusammengefaltet werden können.

Figur 1 zeigt den Seitenwandring 1 aufgerichtet auf einem stirnseitigen Rand stehend und aufgefaltet, d. h. im Gebrauchszustand. Der Seitenwandring 10 ist im Gebrauchszustand hohlzylindrisch rechteckig. Erweist um eine zentrale Längsachse umlaufend vier Ringsegmente 2, 3, 4 und 5 auf, von denen die jeweils benachbarten Ringsegmente 2 und 3, 3 und 4, 4 und 5 sowie 5 und 2 längs einer gemeinsamen Ringfaltachse 6 relativ zueinander klappbar bzw. faltbar sind. Die Ringfaltachsen 6 können als jeweils genau eine theoretische Achse oder, wie im Ausführungsbeispiel, durch einen in Umfangsrichtung geringfügig ausgedehnten Knick- oder Biegebereich verwirklicht sein. Im Ausführungsbeispiel werden die Ringfaltachsen 6 durch jeweils zwei nahe nebeneinander verlaufende Knickachsen gebildet.

Der Seitenwandring 1 kann Zusatzstrukturen aufweisen, wie etwa einen Klappboden, bevorzugt besteht er jedoch wie im Ausführungsbeispiel nur aus den die Seitenwände bildenden Ringsegmenten 2 bis 5 und den die Ringfaltachsen 6 bildenden, in Umfangsrichtung im Vergleich zu den Ringsegmenten 2 bis 5 deutlich schmaleren und somit kantenförmigen Eckbereichen. Mit 7 ist ein im aufgerichteten Zustand freier oberer stirnseitiger Rand der Ringsegmente 2 bis 5 bezeichnet.

Figur 2 zeigt den Seitenwandring 1 im zusammengefalteten Zustand, in dem er platzsparend transportiert und verstaut werden kann. Zum Zusammenfalten wird der Seitenwandring 1 mit geringem Kraftaufwand in eine Parallelogrammform gebracht und aus dieser durch Anlegen der Ringsegmente 2 und 3 gegen die Ringsegmente 4 und 5 flach zusammengefaltet. Der Seitenwandring 1 ist in sich geschlossen, so dass er zur Überführung in den Gebrauchszustand lediglich aufgerichtet und in umgekehrter Richtung wie beim Zusammenfalten über die Parallelogrammform in die Rechteckform gebracht werden kann.

Die Figuren 3 und 4 zeigen den Falteinsatz, Figur 3 im aufgefalteten Gebrauchszustand in einer Isometrie und Figur 4 im entfalteten Zustand in einer Draufsicht. Der Falteinsatz 10 weist einen Boden 11 und seitlich vom Boden 11 abragende Flügel 12, 13, 14 und 15 auf. Der Falteinsatz 10 ist im entfalteten Zustand kreuzförmig mit einem vom Boden 11 gebildeten Zentralbereich, von dem die Flügel 12 bis 15 als Kreuzarme abragen. Die Flügel 12 bis 15 sind jeweils um eine Flügelfaltachse 16 klappbar bzw. faltbar mit dem Boden 11 verbunden. Die Flügelfaltachsen 16 können als die Seitenränder des Bodens 11 betrachtet werden.

Um den Falteinsatz 10 aus dem in Figur 4 dargestellten entfalteten Zustand 10 in den in Figur 3 dargestellten Gebrauchszustand zu bringen, müssen lediglich die Flügel 12 bis 15 um die jeweilige Flügelfaltachse 16 aufeinander zu bis in den in Figur 3 dargestellten aufgerichteten Zustand gefaltet werden. Im aufgerichteten Gebrauchszustand bildet der Falteinsatz ein polygonales Gefäß, im Ausführungsbeispiel einen rechteckförmigen Kasten, mit einer vom Boden 11 entfernten offenen Stirnseite, die von den aufgerichteten Flügeln 12 bis 15 umrahmt wird, wobei die Flügel 12 bis 15 einen in den Eckbereichen jeweils offenen Rahmen bilden, so dass die Flügel 12 bis 15 einfach wieder zurückgefaltet werden können, um den Falteinsatz 10 im entfalteten Zustand zu erhalten.

Der Falteinsatz 10 kann mit den aufgerichteten Flügeln 12 bis 15 an einer offenen Stirnseite des Seitenwandrings 1 in den Seitenwandring 1 eingeschoben werden. Der Boden 11 ist nach Form und Größe an den Querschnitt des aufgefalteten Seitenwandrings 1 angepasst geformt. Seine Außenkontur ist zum Innenquerschnitt des aufgefalteten Seitenwandrings 1 kongruent mit einem geringen Untermaß, so dass die Flügelfaltachsen 16, die die Außenkontur des Bodens 11 zumindest im Wesentlichen bilden, den Ringsegmenten 2 bis 5 mit einem geringen Spaltmaß gegenüberliegen. Die aufgerichteten Flügel 12 bis 15 gleiten beim Einschieben somit an den Innenseiten der Ringsegmente 2 bis 5 entlang und liegen an diesen im vollkommen eingeschobenen Zustand zumindest bereichsweise an. Dies entspricht jedenfalls bevorzugten Ausführungen, unerlässlich ist ein großflächiger oder überhaupt ein seitlicher Kontakt von Flügeln und Ringsegmenten im zusammengesetzten Zustand jedoch nicht.

An den Flügeln 12 bis 15 sind Haltestrukturen 20 vorgesehen, mittels denen der Falteinsatz 10 im zusammengesetzten Zustand des Faltsystems am Seitenwandring 1 abgestützt ist. Die Haltestrukturen 20 sind an den vom Boden 11 entfernten Enden der Flügel 12 bis 15 angeordnet und ragen bei aufgerichteten Flügeln 12 bis 15 von diesen vom Boden 11 wegweisend nach außen ab. Die Haltestrukturen 20 ragen jeweils so weit ab, dass sie beim Einschieben des Falteinsatzes 10 axial in Anschlagkontakt mit dem stirnseitigen Rand 7 (Figur 1) des Seitenwandrings 1 gelangen und dadurch den Falteinsatz 10 im Seitenwandring 1 positionieren und hängend halten, wobei der Falteinsatz 10 vorzugsweise nicht völlig frei an den Haltestrukturen 20 hängt, sondern im Bereich der Flügel 12 bis 15 ein gewisser Reibkontakt mit den Ringsegmenten 2 bis 5 besteht, um den Falteinsatz 10 seitlich, d. h. orthogonal zur Längsachse des Seitenwandrings 1, genauer zu positionieren, in Seitenrichtung relativ zum Seitenwandring 1 vorzugsweise unbeweglich zu halten.

Die Haltestrukturen 20 umfassen jeweils einen Haltestreifen 21, der vom jeweils zugehörigen Flügel 12, 13, 14 oder 15 nach außen abragt und sich längs des vom Boden 11 entfernten Außenrands des jeweiligen Flügels erstreckt. Um die beim Abstützen des Falteinsatzes 10 über den stirnseitigen Rand 7 des Seitenwandrings 1 zu verteilen, ist der Verlauf der Haltestrukturen 20, insbesondere der Haltestreifen 21, dem Verlauf des stirnseitigen Rands 7 angepasst. Die Abstützung ist daher linienförmig. Verläuft der stirnseitige Rand 7 wie im Ausführungsbeispiel in einer zur Längsachse des Seitenwandrings 1 orthogonalen Ebene, verlaufen die Haltestrukturen 20, insbesondere die Haltestreifen 21, zweckmäßigerweise parallel zu den Flügelachsen 16 und in Bezug auf den aufgerichteten Zustand auf gleicher Höhe gemessen zum Boden 11. Verläuft der stirnseitige Rand schräg zur Längsachse des Seitenwandrings 1 oder treppenförmig oder in anderer Weise nicht in einer zur Längsachse des Seitenwandrings 1 orthogonalen Ebene, kann der Verlauf der Haltestrukturen 20, insbesondere der Haltestreifen 21, am jeweiligen Flügel 12, 13, 14 oder 15 diesem anderen Verlauf des stirnseitigen Rands 7 angepasst sein, um die Abstützkraft gleichmäßig längs des jeweiligen Flügels und des stirnseitigen Rands 7 zu verteilen.

Eine oder mehrere der Haltestrukturen 20 kann oder können ein hakenförmiges Profil aufweisen, um im zusammengesetzten Zustand des Faltsystems das jeweilige Ringsegment zu umgreifen. Ein Vorteil des Umgreifens ist, dass der Falteinsatz 10 zum Auseinanderbauen an den Haltestrukturen 20 am umgreifenden Profilbereich gegriffen und dadurch sehr einfach aus dem Seitenwandring 1 gehoben oder gezogen werden kann. Durch das Umgreifen wird auch verhindert, dass der mit der hakenförmigen Haltestruktur 20 versehene Flügel sich vom gegenüberliegenden Ringsegment nach innen abspreizen kann. Um die umgreifenden Haltestrukturen 20 zu erhalten, können die Flügel 12 bis 15 wie etwa im Ausführungsbeispiel zweifach gekantet sein, einmal in etwa rechtwinklig nach außen zum Erhalt der Haltestreifen 21 und noch weiter außen ein weiteres Mal zum Erhalt jeweils eines umgreifenden Längsstreifens 22. Grundsätzlich können die Haltestrukturen 20 aber auch eine runde Profilform aufweisen. Ein Winkelprofil mit wenigstens, vorzugsweise genau zwei Schenkeln, im Beispiel die Streifen 21 und 22, ist jedoch einfach und präzise herstellbar.

Die Haltestrukturen 20 sind in sich und in ihrer Anordnung zum jeweiligen Flügel 12, 13, 14 oder 15 ausreichend steif, um die im Gebrauch auf den Falteinsatz wirkende Gewichtskraft aufnehmen zu können. Jedenfalls sind sie mechanisch so fest bzw. steif, dass sie unter den im Gebrauch in den Flügeln 12 bis 15 wirkenden Zugkräften nicht abknicken können.

Figur 5 zeigt den Falteinsatz10 im entfalteten Zustand aufliegend auf dem stirnseitigen Rand 7 des aufgerichteten, aufgefalteten Seitenwandrings 1. Der Falteinsatz 10 ist für das Einschieben in den Seitenwandring 1 positioniert. Der stirnseitige Rand 7 umgibt dementsprechend den Boden 11 des Falteinsatzes 10, wobei wie bevorzugt, aber nur beispielhaft, zwischen den Flügelfaltachsen 16 und den zugewandt gegenüberliegenden Ringsegmenten 2 bis 5 jeweils ein enger Spalt verbleibt. Die Flügel 12 bis 15 stehen über die stirnseitigen Ränder 7 der Ringsegmente 12 bis 15 jeweils nach außen vor. Werden die Flügel 12 bis 15 aufgerichtet, kann der Falteinsatz 10 axial in den Seitenwandring 1 eingeschoben werden. Die Einschiebebewegung wird durch den axialen Anschlagkontakt der Haltestrukturen 20 am stirnseitigen Rand 7 beendet. Das Faltsystem kann daher mit wenigen Handgriffen und einer einzigen axialen Einschiebebewegung hergestellt werden. Ebenso einfach kann es durch Herausziehen des Falteinsatzes 10, wobei dieser an den Haltestrukturen 20 gegriffen werden kann, auseinandergebaut werden.

Figur 6 zeigt das zusammengesetzte Faltsystem in einem Querschnitt. Insbesondere ist zu erkennen, wie der Falteinsatz 10 im Anschlagkontakt an den Ringsegmenten 2 bis 5 hängend gehalten wird. Erkennbar ist auch das hakenförmige Profil, das die Haltestrukturen 20 gemeinsam mit den äußeren Endabschnitten der Flügel 12 bis 15 bilden. Zwischen den umgreifenden Streifen 22 und dem innen gegenüberliegenden Endabschnitt des jeweiligen Ringsegments verbleibt ein kleiner lichter Abstand a, der ein Greifen des Falteinsatzes 10 im Bereich der Haltestrukturen 20 beim Auseinanderbau erleichtert.

Das Faltsystem des ersten Ausführungsbeispiels kann insbesondere ein Pflanzgefäß bilden. So kann das Faltsystem beispielsweise für die Verwendung als Hochbeet durch entsprechende Abmessungen und mechanische Festigkeit gestaltet sein. Für eine Verwendung als Hochbeet für Balkone, Terrassen und auch für Gärten, weist der Seitenwandring 1 zweckmäßigerweise eine Höhe von wenigstens 40 cm, eine Länge von wenigstens 80 cm und eine Breite von wenigstens 30 cm auf.

In einer Verwendung als Hochbeet kann der in den Seitenwandring 1 eingesetzte Falteinsatz 10 unmittelbar mit Pflanzerde befüllt werden. Zuvor kann auf den Boden 11 eine Wasseraufnahmestruktur, beispielsweise eine Wasserschale oder ein poröser Einsatz, gestellt und auf diese die Pflanzerde gefüllt werden. Das Hochbeet kann anschließend bepflanzt werden. Ebenso ist es denkbar, den eingesetzten Falteinsatz 10 in erster Linie nur als Abstellfläche für Pflanztöpfe zu verwenden.

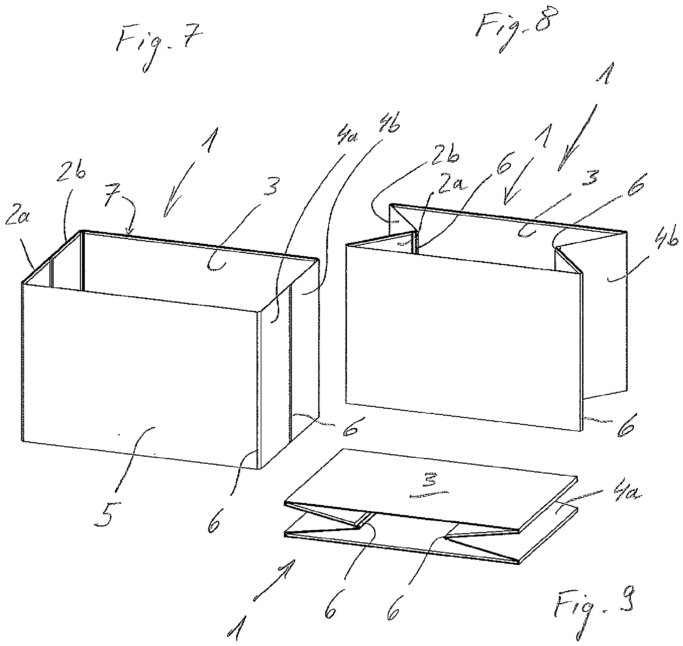

Die Figuren 7 bis 8 zeigen einen modifizierten Seitenwandring 1, der anstelle des Seitenwandrings 1 der Figuren 1 bis 6 mit dem Falteinsatz 10 des ersten Ausführungsbeispiels ein Faltsystem bilden kann. Der modifizierte Seitenwandring 1, der in Figur 7 im aufgerichteten, aufgefalteten Gebrauchszustand dargestellt ist, umfasst sechs Ringsegmente 2a, 2b, 3, 4a, 4b und 5, die um die zentrale Längsachse umlaufend jeweils paarweise längs Ringfaltachsen 6 miteinander verbunden und um die jeweilige Ringfaltachse 6 relativ zueinander klappbar bzw. faltbar sind. Die Ringsegmente 3 und 5 entsprechen den Ringsegmenten 3 und 5 des in Figur 1 dargestellten Seitenwandrings 1. Die beiden in Umfangsrichtung schmaleren, einander gegenüberliegenden Ringsegmente 2 und 4 sind jedoch in je zwei Ringsegmente geteilt, einmal in die Ringsegmente 2a und 2b und das andere Mal in die Ringsegmente 4a und 4b. Die Ringsegmente 2a und 2b sind längs einer Ringfaltachse 6 und die Ringsegmente 4a und 4b sind ebenfalls längs einer Ringfaltachse 6 miteinander verbunden und relativ zueinander klappbar bzw. faltbar. Die Ringsegmente 2a, 2b, 4a und 4b sind in Umfangsrichtung gleich breit. Aufgrund der Unterteilung einander gegenüberliegender Ringsegmente kann der modifizierte Seitenwandring 1, wie in den Figuren 8 und 9 erkennbar, mittels M-Faltung in den Transport- und Lagerungszustand flach zusammengefaltet werden. Der modifizierte Seitenwandring 1 ist im zusammengefalteten Zustand dicker als der Seitenwandring 1 mit den nicht geteilten Seitenwänden 2 und 4. Die größere Dicke wird jedoch durch die aufgrund der M-Faltung verringerte Länge des zusammengefalteten Seitenwandrings 1 kompensiert. Mit der Teilung der Ringsegmente 2 und 4 weist der modifizierte Seitenwandring 1 als solcher im aufgerichteten, aufgefalteten Zustand zwar eine verringerte Steifigkeit auf, im zusammengesetzten Faltsystem wird der modifizierte Seitenwandring 1 jedoch durch den eingesetzten Falteinsatz 10 (Figur 3) in für den Gebrauch beispielsweise als Hochbeet oder sonstiges Pflanzgefäß ausreichendem Maße ausgesteift.

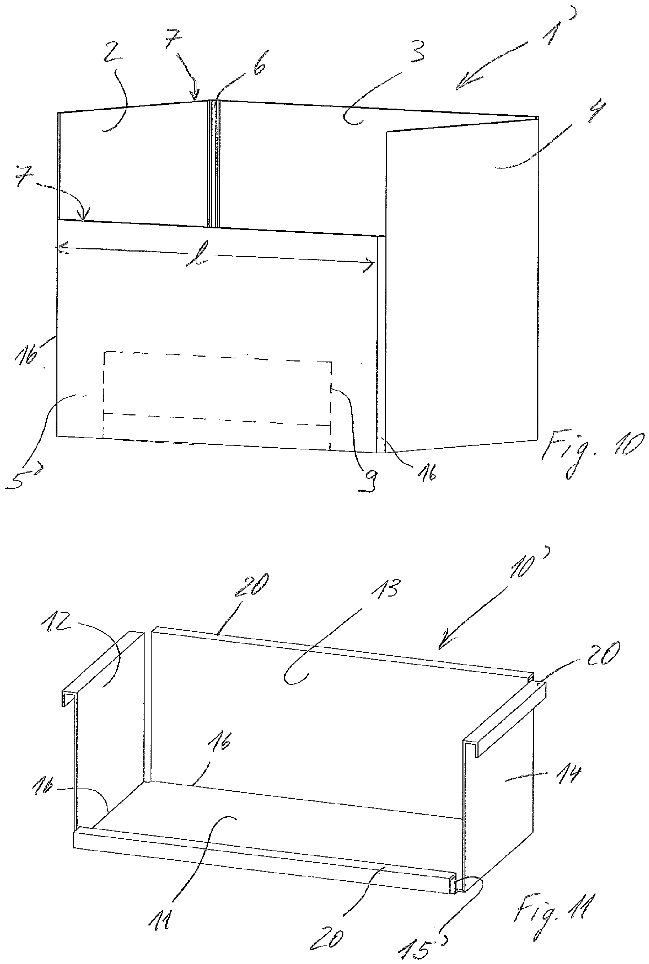

In den Figuren 10 bis 13 ist ein Faltsystem eines zweiten Ausführungsbeispiels dargestellt. Das Faltsystem des zweiten Ausführungsbeispiels umfasst wie im ersten Ausführungsbeispiel einen faltbaren Seitenwandring, der zur Unterscheidung vom ersten Ausführungsbeispiel mit 1' bezeichnet ist, und einen Falteinsatz, der zur Unterscheidung vom ersten Ausführungsbeispiel mit 10' bezeichnet ist. Der Seitenwandring 1' unterscheidet sich vom Seitenwandring 1 nur in Bezug auf das Ringsegment 5, das im zweiten Ausführungsbeispiel mit 5' bezeichnet ist. Das Ringsegment 5' ist in Höhenrichtung des Seitenwandrings 1' kürzer als die anderen Ringsegmente 2 bis 4. Im Ausführungsbeispiel ist das Ringsegment 5' über seine gesamte zwischen seinen beiden Ringfaltachsen 16 gemessene Länge I kürzer als die anderen Ringsegmente 2 bis 4 des Seitenwandrings 1'. Der obere stirnseitige Rand 7 des Ringsegments 5' ist gerade und verläuft parallel zum unteren stirnseitigen Rand des Ringsegments 5'. Der Falteinsatz 10' ist in Bezug auf das modifizierte Ringsegment 5' angepasst modifiziert und unterscheidet sich vom Falteinsatz 10 des ersten Ausführungsbeispiels daher lediglich in Bezug auf den angeapsst modifizierten Flügel 15'.

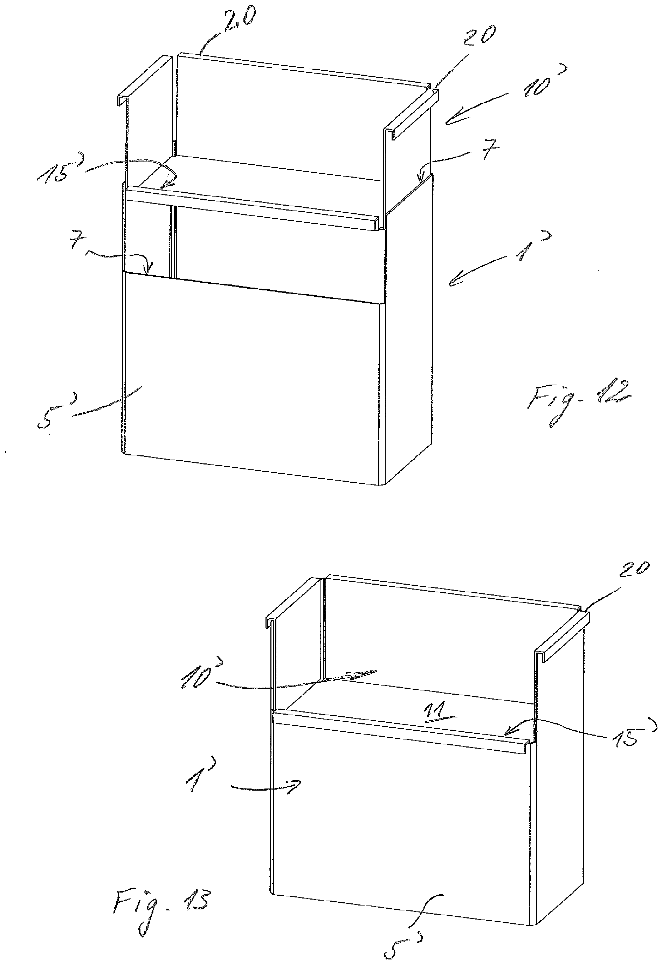

Figur 12 lässt erkennen, wie der Falteinsatz 10' in den Seitenwandring 1' eingeschoben wird.

Figur 13 zeigt das Faltsystem des zweiten Ausführungsbeispiels im zusammengesetzten Zustand, d. h. der Falteinsatz 10' ist vollständig in den Seitenwandring 1' axial eingeschoben, so dass die Haltestrukturen 20 des Falteinsatzes 10' axial im Anschlag auf dem stirnseitigen Rand 7 des Seitenwandrings 1' aufliegen und den Falteinsatz 10' am Seitenwandring 1' abstützen. Die Geometrie und in der Folge die Abstützung ist im Bereich der Flügel 12, 13 und 14 identisch wie im ersten Ausführungsbeispiel. Hinsichtlich der Abstützung gilt dies auch für die Abstützung längsseits des modifizierten Flügels 15' am modifizierten Ringsegment 5'.

Das Faltsystem des zweiten Ausführungsbeispiels kann als Sitzmöbel verwendet werden. Durch entsprechende Gestaltung, insbesondere der Länge I der Ringsegmente 3 und 5' und hieran angepasst des Bodens 11 kann das Faltsystem ein Sitzmöbel, beispielsweise einen Sessel oder Stuhl oder aber eine Sitzbank oder ein Sofa bilden. Das Faltsystem des zweiten Ausführungsbeispiels kann auch als Ablage für Bücher und/oder andere Gegenstände verwendet werden. Es eignet sich zur Aufstellung an einer Wand und auch für eine freistehende Aufstellung.

Das Faltsystem des zweiten Ausführungsbeispiels kann modifiziert werden, indem ein oder mehrere weitere Ringsegmente, beispielsweise das Ringsegment 2 und/oder das Ringsegment 4 auf die Höhe des Ringsegments 5' verkürzt wird oder werden. Der Falteinsatz 1' würde hinsichtlich des jeweils zugeordneten Flügels, beispielsweise des Flügels 12 und/oder des Flügels 14, angepasst verkürzt werden.

In Weiterbildungen kann eines der Ringsegmente 2 bis 5 des ersten Ausführungsbeispiels oder 2 bis 5' des zweiten Ausführungsbeispiels eine Öffnung 9 aufweisen, um den vom Seitenwandring 1 oder 1' umgebenen Raum unterhalb des Falteinsatzes 10 oder 10' als Stauraum nutzen zu können. Die Öffnung 9 kann, wie in Figur 10 in Strichlinie angedeutet, innerhalb des die Öffnung 9 aufweisenden Ringsegments angeordnet sein oder bis zum unteren stirnseitigen Rand des Seitenwandrings 1 oder 1' reichen. Die Öffnung 9 kann einfach offen bleiben. Alternativ kann am die Öffnung 9 aufweisenden Ringsegment eine Klappe oder andersgearteter Verschluss für die Öffnung 9 vorgesehen sein. In Figur 10 soll durch die der unteren Stirnseite des Seitenwandrings 1' nähere, in Längsrichtung verlaufende Strichlinie angedeutet werden, dass die Öffnung 9 umlaufend umrahmt, also vollständig innerhalb des betreffenden Ringsegments, wie zweckmäßigerweise des Ringsegments 5' oder des Ringsegments 5 des ersten Ausführungsbeispiels, gebildet oder bis zur unteren Stirnseite reichen kann.

In Verwendungen als Pflanzgefäß, wie etwa als Hochbeet, aber auch in Verwendungen als Sitzmöbel, kann es vorteilhaft sein, wenn in einem unteren Eckbereich des Seitenwandrings 1 oder 1' ein Paar von Rollen oder Rädern angebracht ist, so dass der Seitenwandring 1 oder 1' samt Falteinsatz und dem gegebenenfalls recht schweren Inhalt durch leichtes Schrägstellen rollend verlagert werden kann.

Die Ringsegmente 2 bis 5 des ersten Ausführungsbeispiels und/oder die Ringsegmente 2 bis 5' des zweiten Ausführungsbeispiels können insbesondere Hohlkammerplatten aus Kunststoff sein. Ein geeignetes Plattenmaterial ist unter der Bezeichnung Conpearl® erhältlich. Besonders geeignet ist Conpearl®-Trilaminat, das zwischen zwei äußeren Deckschichten aus Kunststoff eine mittlere Napfschicht aufweist. Hohlkammerplatten aus Kunststoff, insbesondere aus dem Werkstoff Conpearl®, vereinen die Vorteile eines geringen Gewichts mit einer hohen Steifigkeit gegen Biegung und/oder Torsion und weisen ferner eine vorteilhaft hohe Druckfestigkeit in Plattenlängsrichtung und -breitenrichtung auf.

Zur Herstellung des Seitenwandrings 1 und/oder des Seitenwandrings 1' kann eine Hohlkammerplatte aus Kunststoff mittels Trennverfahren auf die in Umfangsrichtung gemessene Gesamtlänge und, falls erforderlich, auf die in Höhenrichtung des herzustellenden Seitenwandrings 1 und/oder Seitenwandrings 1' gemessene Breite gebracht werden. Die Ringfaltachsen 6 können durch linienförmig lokale Erwärmung und linienförmiges Pressen im erwärmten Bereich des Hohlkammermaterials erzeugt werden. In einem weiteren Arbeitsschritt werden die Ringsegmente um die Ringfaltachsen zum jeweiligen Seitenwandring 1 oder 1' gefaltet und der Ring durch stoffschlüssiges Verbinden der dann einander zugewandten Enden geschlossen. Zweckmäßigerweise wird der Stoffschluss im Bereich eines der Ringsegmente vorgenommen.

Der Falteinsatz 10 und/oder der Falteinsatz 10' kann oder können jeweils vorteilhafterweise ebenfalls aus einem Hohlkammermaterial aus Kunststoff hergestellt werden. Als Ausgangsmaterial kann insbesondere das gleiche Material wie für den zugehörigen Seitenwandring 1 bzw. 1' verwendet werden. Das ringförmige Ausgangsmaterial wird mittels eines geeigneten Trennverfahrens, beispielsweise Schneiden, in die erforderliche Ausgangsform gebracht, in der die Flügel kreuz- oder sternförmig vom zentralen Boden abragen, wie dies für das erste Ausführungsbeispiel in Figur 4 erkennbar ist. Durch linienförmig lokales Erwärmen und linienförmiges Pressen im erwärmten Bereich werden anschließend die Flügelfaltachsen 16 erzeugt. Um die Haltestrukturen 20 an Flügelenden zu formen, werden die betreffenden Flügel linienförmig lokal erwärmt und im erwärmten Zustand der gewünschten Profilform entsprechend wenigstens einmal, vorzugsweise zwei- oder dreimal, gekantet. Anstelle einer Kantung können die Flügelenden auch streifenförmig erwärmt und durch Biegen des erwärmten Streifens ein rundes Haltestrukturprofil erzeugt werden.

Das erfindungsgemäße Faltsystem, wie etwa das Faltsystem des ersten Ausführungsbeispiels und/oder Faltsystem des zweiten Ausführungsbeispiels, kann zusätzlich ein oder mehrere Abdeckelemente umfassen, mit dem oder denen jeweils ein zwischen benachbarten Flügeln freibleibender Eckbereich des Seitenwandrings abgedeckt werden kann. Die Erweiterung des Faltsystems um Abdeckelemente ist insbesondere für Verwendungen im Außenbereich und ganz besonders für die Verwendung als Hochbeet von Vorteil. Abdeckelemente können den Eckbereich des Seitenwandrings 1 vor eindringender Feuchtigkeit und/oder Pflanzerde und/oder Schmutz schützen. Bei Verwendungen als Sitzmöbel kann mittels Abdeckelementen das optische Erscheinungsbild verbessert oder ein auflockernder Designeffekt erzielt werden.

## Patentansprüche

1. Faltsystem, vorzugsweise Pflanzgefäß, das Faltsystem umfassend:
(a) einen Seitenwandring (1) mit Ringsegmenten (2-5), die längs Ringfaltachsen (6) miteinander verbunden und um die Ringfaltachsen (6) faltbar sind, so dass der Seitenwandring (1) flach zusammengefaltet werden kann,
(b) einen Falteinsatz (10) mit einem Boden (11) und Flügeln (12-15), die jeweils längs einer Flügelfaltachse (16) mit dem Boden (11) verbunden und um die jeweilige Flügelfaltachse (16) relativ zum Boden (11) faltbar sind, und
(c) Haltestrukturen (20), die jeweils in einem Abstand vom Boden (11) von den Flügeln (12-15) nach außen abragen,
(d) wobei die Flügel (12-15) bei entfaltetem Falteinsatz (10) vom Boden (11) seitlich nach außen abragen und in einer Projektion, die eine Draufsicht auf den entfalteten Falteinsatz (10) parallel auf einen stirnseitigen Rand (7) des Seitenwandrings (1) projiziert, über den stirnseitigen Rand (7) des Seitenwandrings (1) vorstehen und wobei,
(e) der Falteinsatz (10) mit vom Boden (11) aufgerichteten Flügeln (12-15) in Richtung der Draufsicht in den Seitenwandring (1) einschiebbar ist bis wenigstens eine der Haltestrukturen (20) in Anschlag mit dem stirnseitigen Rand (7) des Seitenwandrings (1) gelangt und den Falteinsatz (10) im Seitenwandring (1) hält.

2. Faltsystem nach Anspruch 1, wobei der Falteinsatz (10) mit aufgerichteten Flügeln (12-15) die Form eines Gefäßes aufweist, das an einer vom Boden (11) entfernten Oberseite offen ist.

3. Faltsystem nach einem der vorhergehenden Ansprüche, wobei die Haltestrukturen (20) jeweils einen Streifen (21) umfassen, der vom aufgerichteten Flügel (12-15), an dem die jeweilige Haltestruktur (20) vorgesehen ist, nach außen vorsteht und sich über wenigstens den überwiegenden Teil der parallel zur Flügelfaltachse (16) gemessenen Breite des Flügels (12) erstreckt.

4. Faltsystem nach einem der vorhergehenden Ansprüche, wobei der Falteinsatz (10) im Anschlagkontakt den stirnseitigen Rand (7) des Seitenwandrings (1) mit wenigstens einer der Haltestrukturen (20), vorzugsweise mit jeder der Haltestrukturen (20), hakenförmig umgreift.

5. Faltsystem nach einem der vorhergehenden Ansprüche, wobei die Ringsegmente (2-5) des Seitenwandrings (1) Hohlkammersegmente, vorzugsweise Hohlkammerplatten, aus Kunststoff sind und/oder der Boden (11) und die Flügel (12-15) des Falteinsatzes (10) über die Flügelfaltachsen (16) verbundene Hohlkammerplatten aus Kunststoff sind.

6. Faltsystem nach einem der vorhergehenden Ansprüche, wobei die Außenkontur des Bodens (11) an die Innenkontur des Seitenwandrings (1) angepasst ist, so dass die Flügel (12) im eingeschobenen Zustand an den Innenflächen der Ringsegmente (2) anliegen.

7. Faltsystem nach einem der vorhergehenden Ansprüche, ferner umfassend Abdeckstrukturen zum Abdecken von zwischen benachbarten Flügeln (12-15) freibleibenden Bereichen des stirnseitigen Rands (7) des Seitenwandrings (1), wobei die Abdeckstrukturen im eingeschobenen Zustand des Falteinsatzes (10) in bevorzugten Ausführungen auf benachbarte Flügel (12-15) steckbar sind und vorzugsweise die Haltestrukturen (20) umgreifen.

8. Faltsystem nach einem der vorhergehenden Ansprüche, wobei der Seitenwandring (1') ein Ringsegment (5') aufweist, das in Richtung der Ringfaltachsen (6) kürzer ist als die anderen Ringsegmente (2-4), und der Falteinsatz (10') einen angepasst an das kürzere Ringsegment (5') kürzeren Flügel (15') aufweist, so dass die Haltestruktur (20) des kürzeren Flügels (15') beim Einschieben des Falteinsatzes (10') in Anschlag gegen den stirnseitigen Rand (7) des kürzeren Ringsegments (5') gelangt.

9. Faltsystem nach einem der vorhergehenden Ansprüche, mit zwei oder mehr Seitenwandringen (1) und Falteinsätzen (10), wobei sich die Seitenwandringe (1) in der Höhe voneinander unterscheiden, wobei die Seitenwandringe (1) mit eingesetzten Falteinsätzen (10) vorzugsweise terrassenförmig angeordnet sind.

10. Faltsystem nach einem der vorhergehenden Ansprüche mit zwei oder
mehreren querschnittsgleichen Seitenwandringen (1) und zwei oder mehr Falteinsätzen (10) wobei die Böden (11) der Falteinsätze (10) jeweils die gleichen Abmessungen haben und sich wenigstens zwei der Falteinsätze (10) in Bezug auf die Länge der Flügel (12-15) voneinander unterscheiden.

11. Verwendung des Faltsystems nach einem der vorhergehenden Ansprüche, als Pflanzgefäß, insbesondere Hochbeet, oder Pflanzgefäßsortiment oder als Sitzmöbel oder als Wandablage oder freistehende Ablage.

12. Faltsystem nach einem der Ansprüche 1 bis 10, wobei wenigstens eines der Ringsegmente (2-5) in einem Bereich unterhalb des eingeschobenen Falteinsatzes (10) eine Öffnung (9) und optional eine Klappe zum Schließen der Öffnung (9) aufweist.

13. Faltsystem nach einem der Ansprüche 1 bis 10, 12 wobei am Seitenwandring (1) um eine gemeinsame Achse drehbare Räder angeordnet sind, um ein Verlagern des Faltsystems zu erleichtern.

14. Faltsystem nach einem der Ansprüche 1 bis 10, 12 bis 13 wobei die Ringsegmente (2-5) den Seitenwandring (1) als einen in sich geschlossenen Seitenwandring (1) bilden.

15. Faltsystem nach einem der Ansprüche 1 bis 10, 12 bis 14 wobei der Seitenwandring (1) wenigstens sechs Ringsegmente (2a, 2b, 3, 4a, 4b, 5) umfasst, die jeweils paarweise längs Ringfaltachsen (6) miteinander verbunden und um die jeweilige Ringfaltachse (6) relativ zueinander mittels M-Faltung faltbar sind.

## Claims

1. A folding system, preferably a planting box, comprising:
(a) a side wall ring (1) comprising ring segments (2-5) which are connected to each other along ring folding axes (6) and can be folded about the ring folding axes (6), such that the side wall ring (1) can be folded up flat;
(b) a folding insert (10) comprising a base (11) and flanks (12-15) which are each connected to the base (11) along a flank folding axis (16) and can be folded about the respective flank folding axis (16) relative to the base (11); and
(c) holding structures (20) which each project outwards from the flanks (12-15) at a distance from the base (11);
(d) wherein the flanks (12-15) project laterally outwards from the base (11) when the folding insert (10) is unfolded and protrude beyond an end-facing edge (7) of the side wall ring (1) in a projection which projects a plan view onto the unfolded folding insert (10) in parallel onto the end-facing edge (7) of the side wall ring (1), and wherein
(e) flanks (12-15) of the folding insert (10) which are raised up from the base (11) can be inserted into the side wall ring (1) in the direction of the plan view until at least one of the holding structures (20) comes to abut with the end-facing edge (7) of the side wall ring (1) and holds the folding insert (10) in the side wall ring (1).

2. The folding system according to Claim 1, wherein the folding insert (10) with its flanks (12-15) raised exhibits the shape of a box which is open at an upper side away from the base (11).

3. The folding system according to any one of the preceding claims, wherein the holding structures (20) each comprise a strip (21) which protrudes outwards from the raised flank (12-15) on which the respective holding structure (20) is provided, and extends over at least the vast majority of the width of the flank (12) as measured parallel to the flank folding axis (16).

4. The folding system according to any one of the preceding claims, wherein when the folding insert (10) is in abutting contact, at least one of the holding structures (20) and preferably each of the holding structures (20) encompasses the end-facing edge (7) of the side wall ring (1) in the shape of a hook.

5. The folding system according to any one of the preceding claims, wherein the ring segments (2-5) of the side wall ring (1) are hollow chamber segments, preferably hollow chamber plates, made of plastic and/or the base (11) and the flanks (12-15) of the folding insert (10) are hollow chamber plates which are made of plastic and connected via the flank folding axes (16).

6. The folding system according to any one of the preceding claims, wherein the outer contour of the base (11) is adapted to the inner contour of the side wall ring (1), such that when inserted, the flanks (12) abut the inner surfaces of the ring segments (2).

7. The folding system according to any one of the preceding claims, further comprising cover structures for covering regions of the end-facing edge (7) of the side wall ring (1) which remain free between adjacent flanks (12-15), wherein when the folding insert (10) is inserted, the cover structures can in preferred embodiments be fitted onto adjacent flanks (12-15) and preferably encompass the holding structures (20).

8. The folding system according to any one of the preceding claims, wherein the side wall ring (1') comprises a ring segment (5') which is shorter in the direction of the ring folding axes (6) than the other ring segments (2-4), and the folding insert (10') comprises a flank (15') which is shorter in conformity with the shorter ring segment (5'), such that when the folding insert (10') is inserted, the holding structure (20) of the shorter flank (15') comes to abut against the end-facing edge (7) of the shorter ring segment (5').

9. The folding system according to any one of the preceding claims, comprising two or more side wall rings (1) and folding inserts (10), wherein the side wall rings (1) differ from each other in height, wherein the side wall rings (1) with their folding inserts (10) inserted are preferably in a terraced arrangement.

10. The folding system according to any one of the preceding claims, comprising two or more cross-sectionally identical side wall rings (1) and two or more folding inserts (10), wherein the bases (11) of the folding inserts (10) each have the same dimensions, and at least two of the folding inserts (10) differ from each other in terms of the length of the flanks (12-15).

11. The use of the folding system according to any one of the preceding claims as a planting box, in particular a raised bed, or range of planting boxes or as seating furniture or as a wall-mounted or free-standing storage box.

12. The folding system according to any one of Claims 1 to 10, wherein at least one of the ring segments (2-5) comprises an opening (9), and optionally a flap for closing the opening (9), in a region below the inserted folding insert (10).

13. The folding system according to any one of Claims 1 to 10 and 12, wherein wheels which can be rotated about a common axis are arranged on the side wall ring (1), in order to facilitate relocating the folding system.

14. The folding system according to any one of Claims 1 to 10 and 12 to 13, wherein the ring segments (2-5) form the side wall ring (1) as a self-contained side wall ring (1).

15. The folding system according to any one of Claims 1 to 10 and 12 to 14, wherein the side wall ring (1) comprises at least six ring segments (2a, 2b, 3, 4a, 4b, 5) which are connected to each other in respective pairs along ring folding axes (6) and can be folded relative to each other about the respective ring folding axis (6) by means of an M-fold.

## Revendications

1. Système pliant, de préférence bac à plantes, le système pliant comprenant:
(a) un anneau de paroi latérale (1) avec des segments d'anneau (2-5), qui sont attachés l'un à l'autre le long d'axes de pliage de l'anneau (6) et qui peuvent être pliés autour des axes de pliage de l'anneau (6), de telle manière que l'anneau de paroi latérale (1) puisse être replié à plat,
(b) un insert pliant (10) avec un fond (11) et des ailes (12-15), qui sont attachées au fond (11) respectivement le long d'un axe de pliage d'aile (16) et qui peuvent être pliées par rapport au fond (11) autour de l'axe de pliage d'aile respectif (16), et
(c) des structures de maintien (20), qui sont chacune en saillie vers l'extérieur sur les ailes (12-15) à une distance du fond (11),
(d) dans lequel les ailes (12-15) sont en saillie latéralement vers l'extérieur sur le fond (11) lorsque l'insert pliant (10) est déplié et dépassent au-delà du bord frontal (7) de l'anneau de paroi latérale (1) dans une projection, qui projette une vue en plan de l'insert pliant déplié (10) parallèlement sur un bord frontal (7) de l'anneau de paroi latérale (1),
et dans lequel
(e) l'insert pliant (10) peut être inséré dans l'anneau de paroi latérale (1) dans la direction de la vue en plan avec des ailes (12-15) dressées sur le fond (11) jusqu'à ce qu'au moins une des structures de maintien (20) vienne buter contre le bord frontal (7) de l'anneau de paroi latérale (1) et maintienne l'insert pliant (10) dans l'anneau de paroi latérale (1).

2. Système pliant selon la revendication 1, dans lequel l'insert pliant (10) avec les ailes dressées (12-15) présente la forme d'un bac, qui est ouvert à un côté supérieur éloigné du fond (11).

3. Système pliant selon l'une quelconque des revendications précédentes, dans lequel les structures de maintien (20) comprennent respectivement une plage (21), qui est prévue à partir de l'aile dressée (12-15) sur la structure de maintien respective (20), dépasse vers l'extérieur et s'étend sur au moins la majeure partie de la largeur de l'aile (12) mesurée parallèlement à l'axe de pliage d'aile (16).

4. Système pliant selon l'une quelconque des revendications précédentes, dans lequel l'insert pliant (10) en contact de butée entoure le bord frontal (7) de l'anneau de paroi latérale (1) avec au moins une des structures de maintien (20), de préférence avec chacune des structures de maintien (20), à la manière d'un crochet.

5. Système pliant selon l'une quelconque des revendications précédentes, dans lequel les segments d'anneau (2-5) de l'anneau de paroi latérale (1) sont des segments à chambre creuse, de préférence des plaques à chambre creuse, en matière plastique, et/ou le fond (11) et les ailes (12-15) de l'insert pliant (10) sont des plaques à chambre creuse en matière plastique reliées par l'intermédiaire des axes de pliage d'aile (16).

6. Système pliant selon l'une quelconque des revendications précédentes, dans lequel le contour extérieur du fond (11) est adapté au contour intérieur de l'anneau de paroi latérale (1), de telle manière que les ailes (12-15) dans l'état inséré s'appliquent sur les faces intérieures des segments d'anneau (2).

7. Système pliant selon l'une quelconque des revendications précédentes, comprenant en outre des structures de recouvrement pour recouvrir des régions du bord frontal (7) de l'anneau de paroi latérale (1) restées libres entre des ailes voisines (12-15), dans lequel les structures de recouvrement dans l'état inséré de l'insert pliant (10) peuvent être engagées dans des formes de réalisation préférées sur des ailes voisines (12-15) et de préférence entourent les structures de maintien (20).

8. Système pliant selon l'une quelconque des revendications précédentes, dans lequel l'anneau de paroi latérale (1) présente un segment d'anneau (5'), qui est plus court que les autres segments d'anneau (2-4) dans la direction des axes de pliage d'anneau (6), et l'insert pliant (10') présente une aile plus courte (15') adaptée au segment d'anneau plus court (5'), de telle manière que la structure de maintien (20) de l'aile plus courte (15') vienne buter contre le bord frontal (7) du segment d'anneau plus court (5') lors de l'insertion de l'insert pliant (10').

9. Système pliant selon l'une quelconque des revendications précédentes, avec deux ou plusieurs anneaux de paroi latérale (1) et inserts pliants (10), dans lequel les anneaux de paroi latérale (1) diffèrent l'un de l'autre en hauteur, dans lequel les anneaux de paroi latérale (1) avec des inserts pliants insérés (10) sont de préférence disposés en forme de terrasses.

10. Système pliant selon l'une quelconque des revendications précédentes, avec deux ou plusieurs anneaux de paroi latérale (1) de même section transversale et deux ou plusieurs inserts pliants (10), dans lequel les fonds (11) des inserts pliants (10) ont chaque fois les mêmes dimensions et au moins deux des inserts pliants (10) diffèrent l'un de l'autre en ce qui concerne la longueur des ailes (12-15).

11. Utilisation du système pliant selon l'une quelconque des revendications précédentes comme bac à plantes, en particulier châssis surélevé, ou assortiment de bacs à plantes ou comme siège ou comme étagère murale ou étagère autonome.

12. Système pliant selon l'une quelconque des revendications 1 à 10, dans lequel au moins un des segments d'anneau (2-5) présente dans une région située en dessous de l'insert pliant inséré (10) une ouverture (9) et en option un clapet pour fermer l'ouverture (9).

13. Système pliant selon l'une quelconque des revendications 1 à 10, 12, dans lequel des roues pouvant tourner autour d'un axe commun sont disposées sur l'anneau de paroi latérale (1), afin de faciliter un déplacement du système pliant.

14. Système pliant selon l'une quelconque des revendications 1 à 10, 12 à 13, dans lequel les segments d'anneau (2-5) forment l'anneau de paroi latérale (1) comme un anneau de paroi latérale (1) par nature fermé.

15. Système pliant selon l'une quelconque des revendications 1 à 10, 12 à 14, dans lequel l'anneau de paroi latérale (1) comprend au moins six segments d'anneau (2a, 2b, 3, 4a, 4b, 5), qui sont attachés l'un à l'autre chaque fois par paires le long d'axes de pliage d'anneau (6) et peuvent être pliés selon un pliage en M l'un par rapport à l'autre autour de l'axe de pliage d'anneau respectif (6).
